# EUROPEAN PATENT APPLICATION

(11) **EP 1 267 289 A1**
(43) Date of publication of application: **18.12.2002**
(21) Application number: 01912335.5
(22) Date of filing: 13.03.2001
(51) Int. Cl.: G06F 17/60

(54) **ELECTRONIC TICKET SYSTEM**

(30) Priority: 13.03.2000 JP 2000068817
(71) Applicant: Pia Corporation, Tokyo 102-0075 (JP)
(72) Inventor: YANAI, Hiroshi, Minato-ku, Tokyo 107-0062 (JP)
(74) Representative: Betten & Resch
(86) International application number: JP0101988
(87) International publication number: WO01069475

(57) **Abstract**

It is an object of the present invention to provide an electronic ticket system in which right information on a ticket is purchased via communication means, and a writable storage medium of the right information is used, thereby granting admittance into an event facility.

The electronic ticket system employs: a data communication terminal (10) which includes a storage medium (28) capable of writing the ticket right information therein; a ticket sales center (12) which is connected to the data communication terminal (10) via communication means (16) and which writes the ticket right information in the storage medium (28); and an admittance management terminal (14) which authenticates the ticket right information when a visitor bringing the storage medium with the ticket right information stored therein passes over a gate, and which determines whether the visitor should be allowed to enter or not. Booking of a ticket is applied to the ticket sales center (12) through the data communication terminal (10), and then the ticket sales center (12) receiving the application issues a ticket right information (35), which is written in the storage medium (28), thereby enabling the purchase of the ticket.

Further, when the visitor passes over the admittance management terminal (14), while carrying the storage medium (28), the system authenticates the ticket right information (35) written in the storage medium (28) by means of the admittance management terminal (14), to determine whether or not the visitor's admittance into the event facility should be granted.

## Description

### Technical Field

The present invention relates to an electronic ticket system for purchasing tickets and granting admittance into event facilities, using storage media.

### Background Art

Conventionally, for instance, in a case where one intends to go to a concert performed by professional artists and the like, he/she usually books a ticket thereof through an authorized ticket sales center of the concert by telephone. And the ticket is issued at the ticket sales center to be handed over to a customer until a designated date, or to be mailed thereto from the ticket sales center, thereby enabling the customer to get the ticket. In a concert hall, the customer presents the purchased ticket to a clerk in charge at a gate, so that he/she is allowed to enter the hall with the half of the ticket torn off. Thus, in the prior art system, the purchase of the entertainment tickets and the admittance or entry into the event facilities such as an event hall, and an arena, is implemented by means of the paper tickets with the contents of the entertainment events printed thereon. The issuing procedure of the paper tickets and the admittance procedure into the event facilities necessitate a large number of workers (clerks in charge). In order to simplify such ticket issuing procedure and admittance procedure, electronic ticket systems have been developed in recent years to issue electronic tickets, and to grant admittance into the event facilities, using the electronic tickets.

Currently, portable telephones or the like having the function of internet connection service permit the booking of the tickets over the internet, but fail to purchase the tickets.

Upon booking the ticket by the portable telephone as described above, the customer can obtain the only booking number and the like of the ticket. However, he/she has to go to the authorized ticket sales agencies to receive the paper ticket, or has to receive it by mail, which is the same as the described prior art system.

An electronic ticket system according to the present invention makes use of a data communication terminal for data communications that has a storage medium capable of recording right information on the ticket. In the system, the purchase of the ticket is applied for using the data communication terminal, and then the ticket right information is transmitted from the ticket sales center, to be stored in the storage medium. Thereafter the system authenticates the ticket right information stored in the storage medium to grant the customer or visitor the admittance into the event facility, thus leading to solve the foregoing problems.

### Disclosure of the Invention

To achieve the aforesaid objects, according to a first aspect of the present invention, there is provided an electronic ticket system for issuing a ticket in electronic form by use of a computer system. The electronic ticket system comprises ticket information storage means for storing ticket information indicative of contents of the ticket to be issued, ticket application receiving means for requiring an applicant for the ticket to input personal information on the ticket applicant, while disclosing the ticket information stored in the ticket information storage means to require the ticket applicant to select the ticket information, authentication means for authenticating the inputted personal information, encryption means for encrypting an electronic ticket including the selected ticket information to obtain encrypted data after the authentication is executed by the authentication means, and electronic ticket issuing means for issuing the encrypted data encrypted by the encryption means to the applicant.

According to a second aspect of the present invention, there is provided an electronic ticket system for issuing a ticket in electronic form by use of a server computer. The electronic ticket system comprises ticket information storage means for storing ticket information indicative of contents of the ticket to be issued, ticket application receiving means for requiring a ticket applicant's computer terminal to input personal information on the ticket applicant over a computer network, while disclosing the ticket information stored in the ticket information storage means to require the ticket applicant's computer terminal to select the ticket information, authentication means for authenticating the inputted personal information, encryption means for encrypting an electronic ticket including the selected ticket information to obtain encrypted data after the authentication is executed by the authentication means, and electronic ticket issuing means for transmitting the encrypted data encrypted by the encryption means to the applicant's computer terminal over the computer network.

According to a third aspect of the present invention, there is provided an electronic ticket system for issuing a ticket in electronic form by use of a server computer. The electronic ticket system comprises ticket information storage means for storing ticket information indicative of contents of the ticket to be issued, ticket application receiving means for requiring a ticket applicant's computer terminal to input personal information on the ticket applicant over a computer network, while disclosing the ticket information stored in the ticket information storage means to require the ticket applicant's computer terminal to select the ticket information, authentication means for authenticating the inputted personal information, encryption means for encrypting an electronic ticket including the selected ticket information to obtain encrypted data after the authentication is executed by the authentication means, electronic ticket storage means for storing information on the electronic ticket to be encrypted into the encrypted data, and electronic ticket issuing means for transmitting the encrypted data encrypted by the encryption means to the applicant's computer terminal over the computer network.

### Brief Description of the Drawings

Fig. 1 is a block diagram of an electronic ticket system according to the present invention.
Fig. 2 is an exemplary flow chart of ticket issuing procedure performed by the electronic ticket system according to the present invention.
Fig. 3 illustrates a display screen installed on a display device in a portable telephone, upon the ticket issuing procedure as shown in Fig. 2.
Fig. 4 is a diagram showing an IC chip that stores ticket right information purchased in accordance with the flow chart of Fig. 2.
Fig. 5 illustrates a display screen installed on the display device in the portable telephone, upon the ticket issuing procedure as shown in Fig. 2.
Fig. 6 is an exemplary diagram showing encrypted data for authentication stored in an authentication encrypted data section of an admittance management terminal according to the present invention.

### Best Mode for Carrying Out the Invention

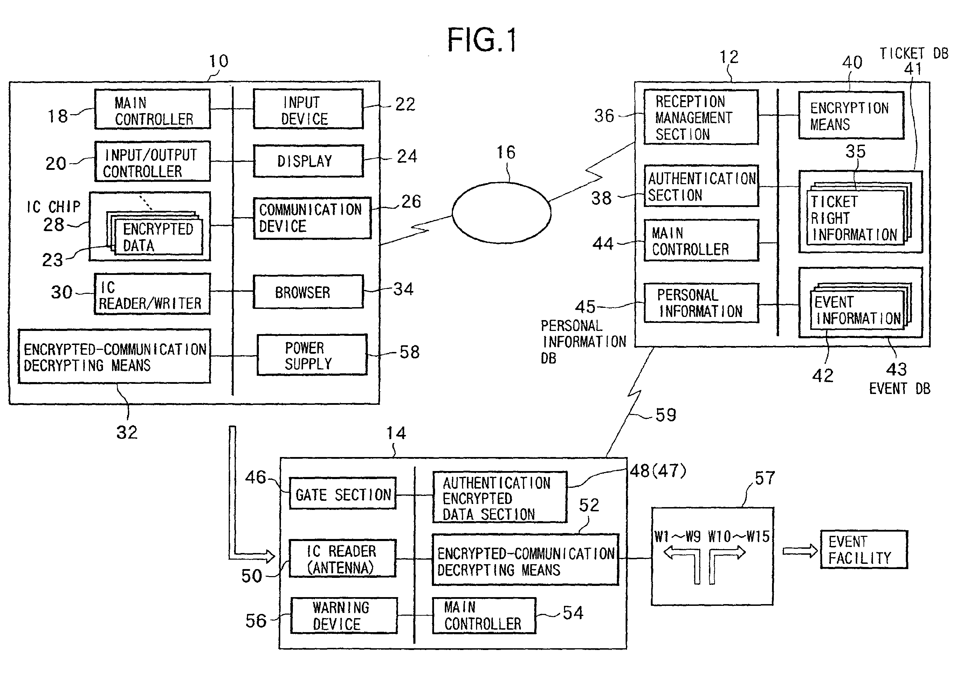

Hereinafter an electronic ticket system according to the present invention will be described in detail with reference to the accompanying drawings. Fig. 1 is a block diagram of the electronic ticket system according to the present invention.

Referring now to Fig. 1, the electronic ticket system includes a portable telephone 10 owned by an applicant who wishes to buy a ticket, and which is a portable data communication terminal (computer terminal), a server (or server computer) 12 that serves as a ticket sales center for issuing (or transmitting) ticket right information on the ticket(or an electronic ticket) purchased by the applicant, an admittance management terminal 14 disposed at the entrance of the event facility, and the Internet 16 serving as communication means.

It is noted that the ticket right information means the "electronic ticket" according to the present invention. Further, what is made by encrypting the above ticket right information, namely "electronic ticket," is hereinafter referred to as "encrypted data."

The portable telephone 10 and the server 12 are connected with each other via the Internet 16 so as to transmit and receive information between them. The communication means of the present invention may be any one of other computer networks, including a mobile portable telephone communication business line, a digital communication network such as a network-only line, and the like.

The ticket right information (namely, electronic ticket) is composed of all or part of the information exchanged between the server 12, and the applicant or portable telephone 10 (hereinafter referred to as "applicant and the like"). For example, the main information provided by the applicant pertains to personal information for the specification of the applicant, such as the applicant's ID number, name, sex, birth date, and address, how to contact the applicant (telephone number of the applicant's portable telephone), the number of a settlement account or a credit card owned by the applicant, and the like. It is noted that the above-mentioned ID number is an identifier which is given by the server 12 to an operator (applicant) who has inputted the various kinds of personal information as described above.

The information supplied from the server 12 pertains to entertainment event information (or ticket information) for the specification of the contents of the ticket purchased by the applicant, including a performance name, a performance date, a performance hall name, a starting time, a seat number, a ticket fee (price of the ticket to be paid for), and so on.

It should be noted here that the information from the server 12 or the applicant is not limited to the above-mentioned one, but that it contains at least the event information.

The portable telephone 10 is a terminal (or a medium) for receiving the ticket right information. The ticket right information is encrypted by the server 12, and then the encrypted data is transferred to the portable telephone 10. In fact, the portable telephone 10 operates to receive the encrypted data of the ticket right information. In the present invention, this encrypted data serves as a means of exchanging the ticket.

The portable telephone 10 includes a main controller 18 that is a device for performing control of each component in a main body and data processing, in conformity with programs not shown, an input/output controller 20 for controlling input/output data, an input device 22 for allowing input of the data by the operation of a button thereof, a display 24 for displaying the contents of encrypted data 23. The portable telephone 10 further includes a communication device 26 for transmitting and receiving information data such as the encrypted data 23, an IC chip 28 serving as a storage medium (or a memory) of the encrypted data 23, an encrypted-communication decrypting means 32 for decrypting and decoding the encrypted data 23, and a browser 34 for making a homepage of the server 12 viewable. The portable telephone 10 is accessible to the server 12 through the Internet 16, and the browser 34 permits the display of the information provided by the server 12 on a display screen of the display 24.

The IC chip 28 as described above is a storable or writable medium of the encrypted data 23 which is received by the communication device. Accordingly, in the IC chip 28 is executed the storage of the received information data, that is, the writing of the ticket right information. Thus, the portable telephone 10 is owned by the applicant and serves as the storage medium capable of storing the encrypted data, namely, the electronic ticket. In order to read and write the encrypted data 23 from and into the IC chip 28, there may be provided an IC reader/writer 30. The IC reader/writer 30 displays on the display 24 the contents of the ticket right information, thereby enabling the applicant for the ticket to confirm the contents thereof. Also, he/she can present the contents to a clerk in charge at an event facility or hall of the ticket.

It should be noted that as a medium which contains or embeds the IC chip 28 therein is used the portable telephone 10 itself in Fig. 1, but that other data communication terminals may be used. For example, through the use of a personal computer, an electronic notebook, a game device, or a computer-network-only terminal disposed in a convenience store and the like, each being connectable to the server 12 via the Internet 16, may be written the ticket right information in the IC chip. And then the IC chip may be embedded into a plastic card, a watch, or the electronic notebook. Also, the above-mentioned data communication terminal may be connected to the IC reader/writer to have the ticket right information recorded in an IC card and the like.

The server 12 is designed to issue the ticket right information in response to the application for the ticket, and to write the ticket right information in the applicant's IC chip 28. This server 12 includes a reception management section 36 which serves as ticket application receiving means for requiring the applicant to input his/her personal information and to select the ticket to be applied for (ticket information) so as to receive the application for the ticket, and which also serves as electronic ticket issuing means for issuing (or transmitting) the ticket right information to the applicant. Also, the server 12 includes an authentication section 38 that functions as authentication means for authenticating the inputted personal information upon the application for the ticket, so as to determine the propriety of issuing the ticket right information, and encryption means 40 that encrypts the ticket right information, the issue of which has been authenticated. The server 12 further includes a ticket database 41 that serves as electronic ticket storage means for storing the ticket right information 35 authenticated, an event database 43 that serves as ticket-information storage means for storing the information on the performance (event information) 42 whose ticket right information is to be issued or sold, and a main controller 44 that controls the manipulating procedures of various information outputted and inputted from and in the server 12. Additionally, a personal information database 45 may be provided to the server 12 that functions as personal information storage means for storing the applicant's personal information. In this personal information database 45 is stored the personal information on respective registered members who make use of the electronic ticket system according to the present invention. It should be noted that the issue of the electronic tickets according to the system of the present invention is targeted not only for the registered members stored in the personal information database 45, but also for all those who input their personal information.

The propriety of the issue of the ticket right information is judged by the authentication section 38. That is, the authentication section 38 determines whether the ticket right information applied for is to be sold or not. For example, the authentication section 38 gives to a person who illegally accesses over the Internet 16, a notice of nonsale such as "The ticket is not available to you." This is necessary for the personal authentication. Together with the notice of nonsale as described above, there may be provided a notice of guidance about purchasing procedure such as "To buy a ticket, the purchase of an IC chip (or an IC card), or the acquisition of IC number is necessary."

Also, the authentication section 38 has a function of settlement to charge for a ticket fee not shownf In a case where the issue of the ticket information is admitted, the settlement procedure is executed by a bank account having a paying contract, a credit card, or the like, after the authentication.

The ticket right information 35 authenticated is registered (or stored) in the ticket database 41. And this right information is encrypted by the encryption means 40 to issue (or transmit) to the applicant and the like as the encrypted data 23.

The issued (or transmitted) encrypted data 23 is stored in the IC chip 28 of the portable telephone 10, so that the ticket right information 35 is written in the IC chip 28. In the case of confirming the contents of the encrypted data 23 on the display 24, the encrypted data 23 in the IC chip 28 is decrypted by the encrypted-communication decrypting means 32, to be displayed on the display 24. The encrypted data 23 is to be decrypted by the encrypted-communication decrypting means 32, so it is never decrypted by operators who do not have any encrypted-communication decrypting means 32. Therefore, even if the encrypted data 23 is accidentally transmitted to an outsider, it is never used illegally.

The admittance management terminal 14 is used to authenticate the encrypted data 23 stored in the portable telephone 10 at a ticket gate for authentication of the ticket. The admittance management terminal 14 is a device that allows the readout of the ticket right information stored in the IC chip 28 of the portable telephone 10, that is, the encrypted data 23. Accordingly, the admittance management terminal 14 is operable to determine whether or not the admittance should be granted.

This admittance management terminal 14 includes a gate section 46 for forming a gate of the event facility, and an authentication encrypted data section 48 for authenticating the encrypted data. The authentication encrypted data section 48 serves as electronic-ticket-information storage means for storing authentication encrypted data (electronic ticket information) 47 inputted, which is to grant the admittance. It also serves as verifying means for verifying information on the encrypted data 23 upon passing through the ticket gate against the information on the authentication encrypted data 47, so as to authenticate the encrypted data. The admittance management terminal 14 also includes an IC reader (antenna) 50 used as encrypted data detecting means for reading the encrypted data 23 from the IC chip 28, encrypted-communication decrypting means 52 for decrypting and decoding the encrypted data, and a main controller 54 for controlling the manipulating procedures of the various kinds of information at the admittance management terminal 14. The gate section 46 functions as ticket gate control means for performing control of opening and closing of the ticket gate at a gate entrance, based on the verification by the authentication encrypted data section 48.

The authentication encrypted data section 48 downloads the ticket right information 35 registered (or stored) in the ticket database 41 of the server 12. Upon the downloading, all of the ticket right information 35 regarding the event of interest may be downloaded, but the only ticket right information necessary for the authentication (or a part of the ticket right information 35) may be downloaded. The ticket right information 35 is downloaded in the form of encrypted data, which is to be decrypted by the encrypted-communication decrypting means 52. This download from the server 12 enables the ticket right information stored in the authentication encrypted data section 48 to be used as the authentication encrypted data 47.

As means or methods for storing the authentication encrypted data 47 in the authentication encrypted data section 48 other than the foregoing downloading means, the following means or methods may be implemented. That is, the ticket right information necessary for the authentication is written in a storage medium such as a floppy disc, so that it is stored in the authentication encrypted data section 48 via the storage medium.

It should be noted that the authentication data to be stored in the authentication encrypted data section 48 is not limited to the encrypted data of the ticket right information 35. The present invention may provide a system in which the admittance management terminal 14 (or the authentication encrypted data section 48) further comprises a data input device not shown capable of inputting data, and then by means of the data input device, the data required for the authentication is stored in the authentication encrypted data section 48. That is, the data stored in the authentication encrypted data section 48 may not be necessarily encrypted data. In this case, there is no need to provide the encrypted-communication decrypting means 52.

The encrypted data 23 stored in the IC chip 28 of the portable telephone 10 carried by a visitor (or an applicant), or stored in an IC card not shown, is read out by the IC reader 50. Thereafter the encrypted data 23 is verified against the authentication encrypted data 47 in the authentication encrypted data section 48, or the ticket right information 35 registered (or stored) in the ticket database 41 of the server 12. When the verification results in agreement, the visitor is allowed to enter the event facility. If the visitor brings the encrypted data 23 not matching, he/she is refused admittance. Furthermore, the admittance management terminal 14 may be provided with a warning device 56 for alerting the clerks of an illegal passage based on the verification. In this case, if the illegal passage occurs, the alarm may be raised so as to inform the clerks of the illegal passage.

Also, the admittance management terminal 14 is equipped with an event-facility-guidance-information output device 57 that detects information about a seat number from the ticket right information, to provide seat position guidance on the seat number. For instance, the event-facility-guidance-information output device 57 may be an electric notice board for indicating the nearest door number as shown in Fig. 1, or a printer for outputting a seat position guidance map not shown. The provision of the event-facility-guidance-information output device 57 permits cutting congestion after the passage of the gate, thereby making the clerk's event-facility guidance unnecessary.

As illustrated in Fig. 1, the admittance management terminal 14 is provided with the authentication encrypted data section 48 for downloading the encrypted data of the ticket right information 35 registered (or stored) in the ticket database 41 of the server 12, so that the encrypted data owned by the visitor or applicant is verified against the authentication encrypted data 47. The visitor who brings his/her encrypted data matching the authentication encrypted data 47 is granted the admittance into the event facility. In such a case, the ticket database 41 of the server 12 does not need to authenticate. The present invention, however, is not limited to this case. For instance, on condition that the server 12 and the admittance management terminal 14 are connected via an online circuit 59 as shown in Fig. 1, the encrypted data 23 owned by the visitor may be verified against the information registered in the ticket database 41 of the server 12, to let the authenticated visitor in the event facility. Furthermore, the online circuit 59 may be a high-speed communication circuit that can manipulate high-capacity data exchanged between the admittance management terminal 14 and the server 12, at high speeds. Through the high-speed communication circuit, the information on the high-capacity encrypted data 23 detected by the admittance management terminal 14 is verified against the ticket right information 35 stored in the server 12, thereby speeding up the authentication at the admittance management terminal 14 to prevent the congestion at the gate. In this case, if there occurs trouble in the ticket database 41 of the server 12, the authentication using the server becomes impracticable. However, as mentioned above, the visitor makes the display 24 of the his/her portable telephone 10 display the information on the encrypted data 23 that is stored in the IC chip 28, thereby enabling the clerk to authenticate the encrypted data. As a result, it is possible to avoid confusion caused by the trouble in the ticket database 41 of the server 12.

Thus, in the system of the present invention, the encrypted data 23 into which the ticket right information 35 is encrypted is to be decrypted by the portable telephone 10 and the admittance management terminal 14. Therefore, the system of the present invention necessitates a data communication terminal having at least one IC chip 28. Among the data communication terminals, the portable telephone 10 (including PHS) serving as a portable data communication mobile terminal is the most useful as a medium which enables the display of the event information 42, the input of data, and the connection with the communication means 16, since it basically includes the input device (key button) 22, the display device (display) 24, and the communication means 26.

As the storage medium embedded into the portable data communication terminal may be used a non-contact IC chip, thereby permitting the admission and leaving into and from the event facility without coming into contact with the storage medium. If an IC card is used as the storage medium for storing the ticket right information, the non-contact type IC card would be better, thus enabling the admission and leaving without contact.

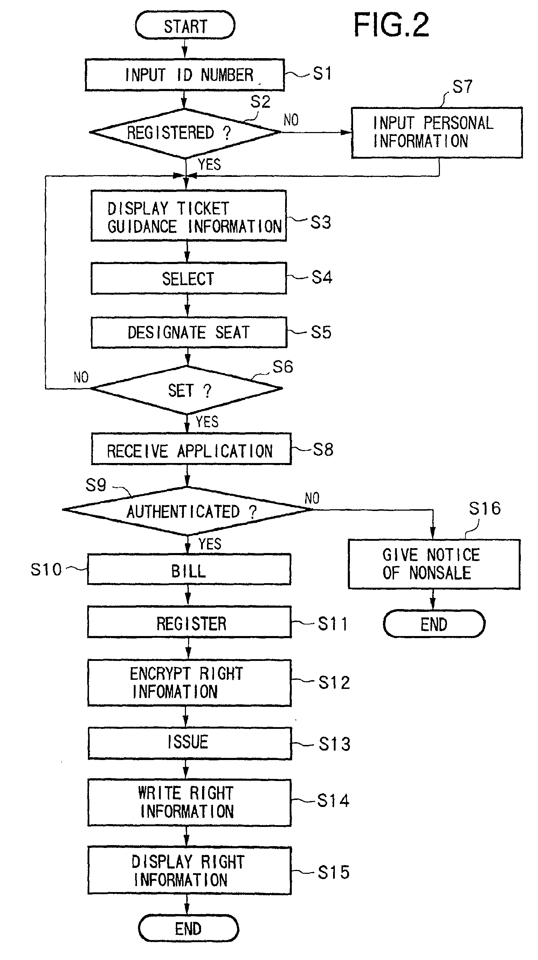

Next, an example of the operation of the electronic ticket system according to the present invention when purchasing the ticket right information will be described. Fig. 2 is an exemplary flow chart of a ticket issuing procedure performed by the electronic ticket system according to the present invention.

The flow chart of Fig. 2, illustrating the ticket issuing process implemented by the electronic ticket system of the present invention, shows an exemplary case where the Internet 16 is used as the communication means, and the ticket application and issue procedures are carried out on the homepage of the server 12. This flow chart starts up, after a power supply 58 of the portable telephone 10 is turned on to put the browser 34 in commission from a display screen 60 of the display 24 of the portable telephone 10 (hereinafter referred to as "display screen 60"), and the applicant gets access to the server 12.

It is noted that the present embodiment includes the personal information database 45 that stores the applicant's personal information, as shown in Fig. 1.

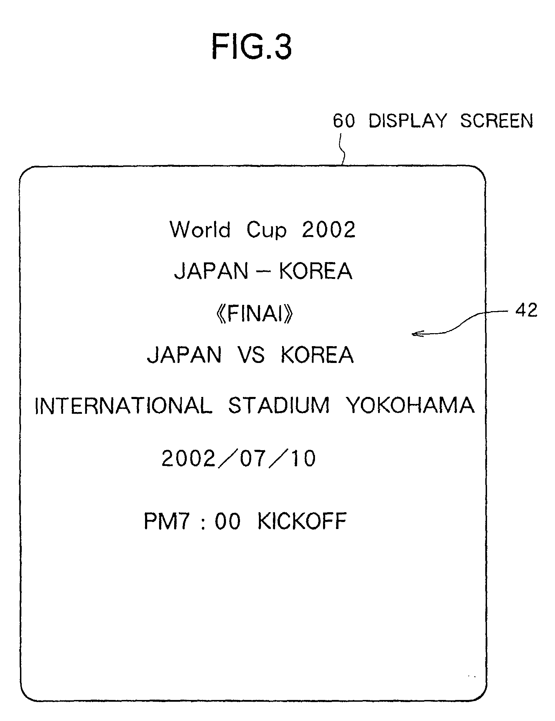

First, on the homepage screen of the server 12 is provided an applicant's ID number box, and then the applicant's own ID number is inputted into the box (step S1) Thereafter the registered contents of the registered personal information are displayed (step S2). If the registered contents are not wrong or do not need amendments, the event information 42 stored in the event database 43 is provided on the display 24 as the ticket guidance information (step S3). From this ticket guidance information, the display of a desired performance, for example, the display 60 indicating "World Cup 2002 JAPAN-KOREA «Final»" (see Fig. 3) is selected (step S4), and subsequently the seat, for example "1F Main stand" is designated (step S5). Next, the desired performance and seat already selected are set or determined (step S6). If there is a need to change the selected performance into another, the operation returns to the step S3.

In a case where it turns out in the step S2 that the applicant's personal information has not been registered yet, a personal information box is displayed to input the personal information(step S7). Also, in a case where there is a change in the applicant's personal information, a new applicant's personal information can be inputted into the box in the step S7. After the input of the applicant's personal information, the operation proceeds to the step S3 and the following steps thereof.

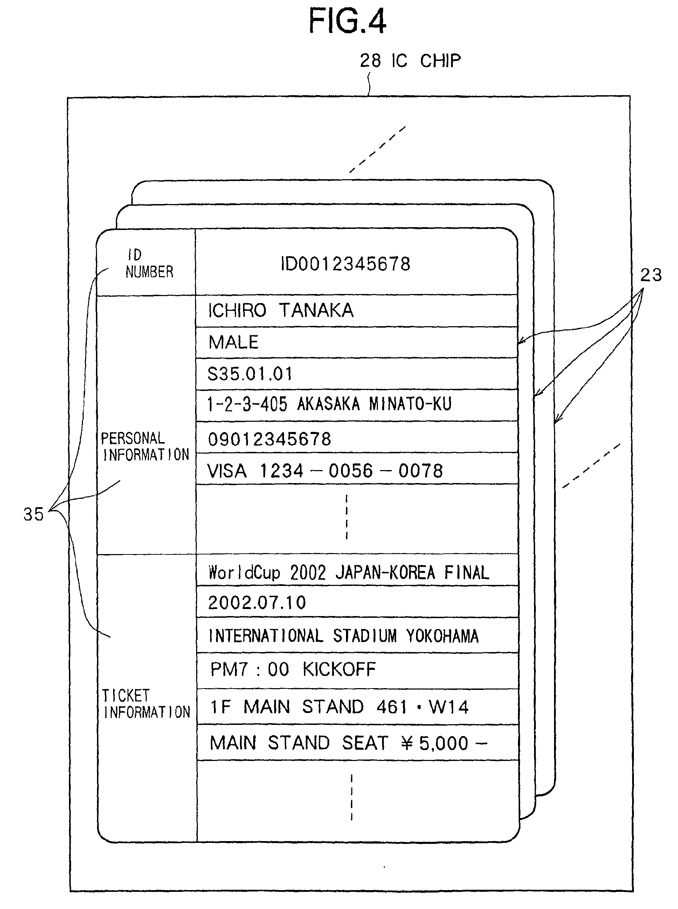

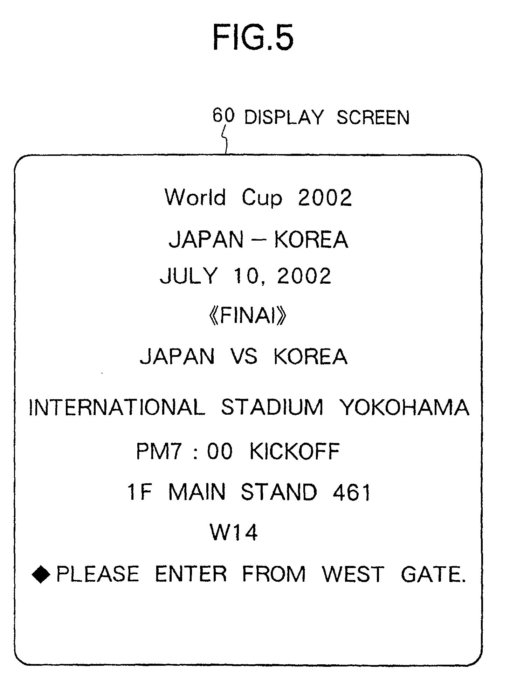

The server 12 (or the reception management section 36) for receiving an application receives the contents of the application (step S8), and consults the authentication section 38 (step S9). The authenticated application is subjected to the billing procedure (step S10), and thereafter the applicant's ID number and personal information, and the event information are registered (or stored) as the ticket right information in the ticket database 41 (step S11). After the registering (or storing) procedure, the encryption means encrypts the ticket right information 35 registered (or stored) in the ticket database 41 and to be issued, into the encrypted data 23 (step S12), and this encrypted data 23 is transmitted to the applicant's portable telephone 10 (step S13). The transmitted encrypted data 23 is then received and stored in the IC chip 28 so that the ticket right information 35 is written in the IC chip 28 as illustrated in Fig. 4 (step S14). Thus, the purchase of the ticket by the applicant is completed. Simultaneously, the contents of the purchased ticket are displayed on the display 24 as shown in Fig. 5 (step S15). On the other hand, a notice of nonsale is given to an applicant who cannot gain the authentication of issuing the ticket (step S16).

The writing of the ticket right information is implemented by the communication means, thereby permitting repeated implementation of the writing. That is, a plurality of encrypted data 23 can be stored in the IC chip 28.

The ticket right information 35 as shown in Fig. 4 is comprised of the applicant's ID number, the personal information, and the event information. The personal information, which is previously stored in the server 12, includes the applicant's name, sex, birth date, and address, how to contact the applicant (telephone number of the applicant's portable telephone), the number of a settlement account or a credit card. The event information, which is previously stored in the server 12, includes a performance name, a performance date, a performance hall name, a starting time, a seat number, a bill (a ticket fee), and so on. Each of the described information is written in the applicant's or customer's IC chip 28.

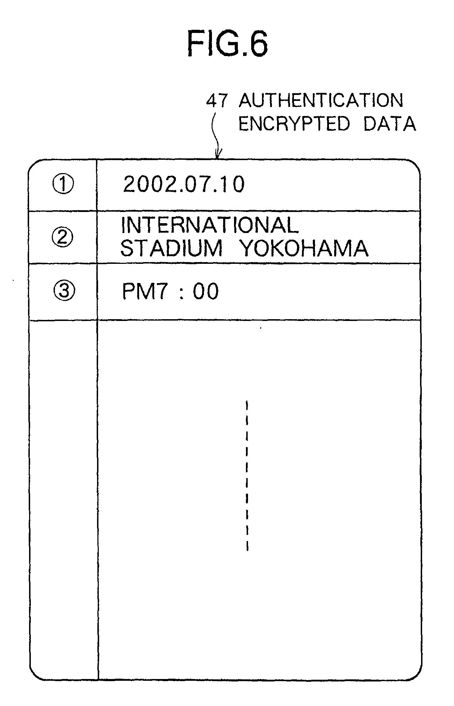

For instance, as to the performance "World Cup 2002 JAPAN-KOREA «Final»", the authentication encrypted data 47 (see Fig. 6) indicative of 1) a game date, 2) an arena name, 3) a game starting time is downloaded from the ticket database 41 of the server 12 in the authentication encrypted data section 48 of the admittance management terminal 14. In this case, a visitor having the ticket right information 35 of Fig. 4 is allowed to enter the arena upon passing over the admittance management terminal 14, when the ticket right information 35 owned by the visitor is authenticated by the verification thereof against the authentication encrypted data of Fig. 6 indicative of 1) a game date, 2) an arena name, 3) a game starting time. It is noted that the authentication encrypted data 47 upon the admission is not limited to the above-mentioned 1), 2) and 3). For example, it concerns the only IC number of the ticket right information indicative of the event information as shown in Fig. 4.

Now, suppose a customer or purchaser of a ticket does not own a portable telephone, a personal computer, or the like, the purchasing procedure of the ticket according to the present invention will be implemented as described below. In detail, for example, this case can be the situation where the customer makes use of an electronic ticket purchasing-only terminal disposed in a convenience store or a shop inside a station so as to make an application for the electronic ticket. The electronic ticket purchasing-only terminal is a fixed terminal having the substantially same construction as that of the portable telephone 10. In a case where the customer already registered in the server 12 (namely, the registered member) intends to buy the ticket, he/she uses the electronic ticket purchasing-only terminal installed in the convenience store and the like, to gain access to the server 12, and then makes the ticket right information 35 written in the IC chip 28 or IC card, thereby enabling the purchase of the electronic ticket. In a case where he/she is not a registered member, he/she should pay for a ticket fee the convenience store which installs the electronic ticket purchasing-only terminal therein, to obtain an IC card where the only event information is written, thus enabling the purchase of the ticket.

All the embodiments as described above relate to the electronic ticket systems for manipulating the event information (the contents of the tickets regarding the performances) in electronic form. However, the electronic ticket system of the present invention is not limited to the event information. It may issue the electronic ticket indicative of information on other tickets, such as a train ticket, an embarkation ticket, a meal coupon, a receipt, a passport, or the like. That is, the electronic ticket system of the present invention can be used for manipulating the "ticket information" on various kinds of the tickets conventionally issued and sold in paper form.

### Industrial Applicability

As mentioned above, the electronic ticket system according to the present invention manipulates the ticket right information itself as credit information, thereby providing a paperless system that does not need to receive and transmit the paper tickets. As a result, this eliminates the significant need for workers as required for the issue of the tickets. Also, there is no need to print the event information on ticket papers, thereby permitting the quick issue of the tickets.

Further, the electronic ticket system according to the present invention employs the system in which the ticket right information is written in the implantable storage medium such as the IC chip. Accordingly, the system permits the use of another medium that is capable of embedding the IC chip therein, other than the portable telephone, or the use of a card for storage that is indefinite in shape, so that the user can own the ticket right information in the form of desired medium.

Additionally, in the electronic ticket system according to the present invention, the non-contact IC chip is used as the storage medium that passes through the admittance management terminal without contact, and the admittance management terminal is provided with the event facility guidance display or the printer operable to make the event facility guidance map, both being used for the guide to the event facility. As a result, the admission of the visitors into the event facility is achieved smoothly, making it possible to avoid the congestion at the gate. Also, this eliminates the significant need of workers as required for the examination of the tickets and for the guide to the event facility.

## Claims

1. An electronic ticket system for issuing a ticket in electronic form by use of a computer system, comprising:
ticket information storage means for storing ticket information indicative of contents of the ticket to be issued;
ticket application receiving means for requiring an applicant for the ticket to input personal information on said ticket applicant, while disclosing the ticket information stored in said ticket information storage means, to require the ticket applicant to select said ticket information;
authentication means for authenticating said inputted personal information;
encryption means for encrypting an electronic ticket including said selected ticket information to obtain encrypted data, after the authentication is executed by said authentication means; and
electronic ticket issuing means for issuing the encrypted data encrypted by said encryption means to the applicant.

2. The electronic ticket system according to claim 1, wherein said electronic ticket is composed of said authenticated personal information and said selected ticket information.

3. The electronic ticket system according to any one of claims 1 and 2, further comprising electronic ticket storage means for storing information on said electronic ticket to be encrypted into said encrypted data.

4. The electronic ticket system according to any one of claims 1 - 3, wherein said electronic ticket issuing means makes said encrypted data stored in a storage medium that is owned by the applicant.

5. The electronic ticket system according to any one of claims 1 - 5, further comprising an admittance management terminal for authenticating the encrypted data stored in said storage medium at a ticket gate for authentication of the ticket, the admittance management terminal comprising:
electronic-ticket-information storage means for storing the information on said electronic ticket;
encrypted data detecting means for detecting the encrypted data stored in said storage medium;
verifying means for verifying information on the encrypted data detected by said encrypted data detecting means against the information stored in said electronic-ticket-information storage means; and
ticket gate control means for performing control of opening and closing of the ticket gate based on the verification of said verifying means.

6. The electronic ticket system according to claim 5, wherein said encrypted data detecting means is designed to allow the detection of said encrypted data without coming into contact with said storage medium.

7. The electronic ticket system according to any one of claims 4 - 6, wherein said storage medium is an IC card that enables the storage of said encrypted data.

8. The electronic ticket system according to any one of claims 4 - 6, further having a portable data communication terminal serving as said storage means, the portable data communication terminal comprising:
an IC chip that allows the storage of the encrypted data;
encrypted-communication decrypting means for decrypting and decoding the encrypted data stored in said IC chip; and
a display for displaying the information on said encrypted data already decoded.

9. The electronic ticket system according to claim 5, wherein said admittance management terminal further comprises a warning device that informs an operator of illegal passage based on the verification of said verifying means.

10. The electronic ticket system according to claim 5, wherein said admittance management terminal further comprises an event-facility-guidance-information output section for providing a guide to an event facility based on said ticket information.

11. An electronic ticket system for issuing a ticket in electronic form by use of a server computer, comprising:
ticket information storage means for storing ticket information indicative of contents of the ticket to be issued;
ticket application receiving means for requiring a ticket applicant's computer terminal to input personal information on said ticket applicant over a computer network, while disclosing the ticket information stored in said ticket information storage means, to require the ticket applicant's computer terminal to select said ticket information;
authentication means for authenticating said inputted personal information;
encryption means for encrypting an electronic ticket including said selected ticket information to obtain encrypted data, after the authentication is executed by said authentication means; and
electronic ticket issuing means for transmitting said encrypted data encrypted by said encryption means to the applicant's computer terminal over the computer network.

12. The electronic ticket system according to claim 11, wherein said electronic ticket is composed of said authenticated personal information and said selected ticket information.

13. The electronic ticket system according to any one of claims 11 and 12, wherein said encrypted data is stored in a storage medium loaded on the applicant's computer terminal.

14. The electronic ticket system according to any one of claims 11 - 13, further comprising electronic ticket storage means for storing information on said electronic ticket to be encrypted into said encrypted data.

15. The electronic ticket system according to claim 14, further comprising an admittance management terminal for authenticating the encrypted data stored in said storage medium at a ticket gate for authentication of the ticket, the admittance management terminal comprising:
encrypted-communication decrypting means for decrypting and decoding the encrypted data;
electronic-ticket-information storage means to which the encrypted data on the electronic ticket information stored in said electronic ticket storage means is transferred from the server computer over the computer network, said encrypted data being to be decoded by said encrypted-communication decrypting means, and which stores said transferred electronic ticket information;
encrypted data detecting means for detecting the encrypted data stored in said storage medium;
verifying means for verifying information on the encrypted data detected by said encrypted data detecting means against the information stored in said electronic-ticket-information storage means; and
ticket gate control means for performing control of opening and closing of the ticket gate based on the verification of said verifying means.

16. The electronic ticket system according to claim 15, wherein said encrypted data detecting means is designed to allow the detection of said encrypted data without coming into contact with said storage medium.

17. The electronic ticket system according to any one of claims 11 - 15, having a portable data communication terminal serving as said applicant's computer terminal, the portable data communication terminal comprising:
an input/output controller for receiving the encrypted data from the server computer over the computer network;
a storage medium capable of storing said encrypted data;
encrypted-communication decrypting means for decrypting and decoding the encrypted data stored in said storage medium; and
a display for displaying the information on said encrypted data already decoded.

18. The electronic ticket system according to any one of claims 13 - 17, wherein said storage medium is one of an IC chip and an IC card, which are capable of storing said encrypted data.

19. The electronic ticket system according to claim 15, wherein said admittance management terminal further comprises a warning device that informs an operator of illegal passage based on the verification of said verifying means.

20. The electronic ticket system according to claim 15, wherein said admittance management terminal further comprises an event-facility-guidance-information output section for providing a guide to an event facility based on said ticket information.

21. An electronic ticket system for issuing a ticket in electronic form by use of a server computer, comprising:
ticket information storage means for storing ticket information indicative of contents of the ticket to be issued;
ticket application receiving means for requiring a ticket applicant's computer terminal to input personal information on said ticket applicant over a computer network, while disclosing the ticket information stored in said ticket information storage means, to require the ticket applicant's computer terminal to select said ticket information;
authentication means for authenticating said inputted personal information;
encryption means for encrypting an electronic ticket including said selected ticket information to obtain encrypted data, after the authentication is executed by said authentication means;
electronic ticket storage means for storing information on the electronic ticket to be encrypted into said encrypted data; and
electronic ticket issuing means for transmitting said encrypted data encrypted by said encryption means to the applicant's computer terminal over the computer network.

22. The electronic ticket system according to claim 21, wherein said electronic ticket is composed of said authenticated personal information and said selected ticket information.

23. The electronic ticket system according to any one of claims 21 and 22, wherein said encrypted data is stored in a storage medium loaded on the applicant's computer terminal.

24. The electronic ticket system according to claim 23, further comprising an admittance management terminal for authenticating the encrypted data stored in said storage medium at a ticket gate for authentication of the ticket, the admittance management terminal comprising:
encrypted data detecting means for detecting the encrypted data stored in said storage medium;
verifying means for verifying information on the encrypted data detected by said encrypted data detecting means against the electronic ticket information stored in said electronic ticket storage means by communication with the server computer over the computer network; and
ticket gate control means for performing control of opening and closing of the ticket gate based on the verification of said verifying means.

25. The electronic ticket system according to claim 24, wherein said encrypted data detecting means is designed to allow the detection of said encrypted data without coming into contact with said storage medium.

26. The electronic ticket system according to any one of claims 21 - 25, having a portable data communication terminal serving as said applicant's computer terminal, the portable data communication terminal comprising:
an input/output controller for receiving the encrypted data from the server computer over the computer network;
a storage medium capable of storing said encrypted data;
encrypted-communication decrypting means for decrypting and decoding the encrypted data stored in said storage medium; and
a display for displaying the information on said encrypted data already decoded.

27. The electronic ticket system according to any one of claims 23 - 25, wherein said storage medium is one of an IC chip and an IC card, which are capable of storing said encrypted data.

28. The electronic ticket system according to claim 24, wherein said admittance management terminal further comprises a warning device that informs an operator of illegal passage based on the verification of said verifying means.

29. The electronic ticket system according to claim 24, wherein said admittance management terminal further comprises an event-facility-guidance-information output section for providing a guide to an event facility based on said ticket information.
